# FASCICULE DE BREVET EUROPEEN

(11) **EP 3 031 716 B1**
(45) Date de publication et mention de la délivrance du brevet: **22.03.2017**
(21) Numéro de dépôt: 15198294.9
(22) Date de dépôt: 07.12.2015
(51) Int. Cl.: B64C 25/52

(54) **TRAIN D'ATTERRISSAGE A PATINS MUNI D'AU MOINS UN AMORTISSEUR, ET AERONEF**
KUFENFAHRWERK, DAS MIT MINDESTENS EINEM STOSSDÄMPFER AUSGESTATTET IST, UND ENTSPRECHENDES LUFTFAHRZEUG
SKID LANDING GEAR HAVING AT LEAST ONE DAMPER, AND AN AIRCRAFT

(30) Priorité: 11.12.2014 FR 1402813
(43) Date de publication de la demande: 15.06.2016
(73) Titulaire: Airbus Helicopters, 13725 Marignane Cedex (FR)
(72) Inventeur: CRANGA, Paul, 13004 MARSEILLE (FR)
(74) Mandataire: GPI & Associés

(56) Documents cités:
- EP-A1- 0 512 898
- US-A- 3 716 208
- US-A- 3 822 048

## Description

La présente invention concerne un train d'atterrissage à patins muni d'au moins un amortisseur, et un aéronef comportant ce train d'atterrissage. Plus précisément, l'invention se situe dans le domaine technique des trains d'atterrissage à patins de giravion.

Classiquement, un giravion comporte un train d'atterrissage sur lequel le giravion repose au sol. Plus particulièrement, parmi les trains d'atterrissage, on distingue les trains d'atterrissage dénommés « train d'atterrissage à patins » munis d'un premier patin longitudinal d'appui et d'un deuxième patin longitudinal d'appui. Les patins sont destinés à être en contact avec le sol et disposés de part et d'autre du fuselage du giravion. Le premier patin longitudinal d'appui et le deuxième patin longitudinal définissent conjointement un plan dénommé « plan d'appui » par commodité.

L'aéronef repose alors sur le sol via deux patins allongés.

Pour relier chaque patin au fuselage de l'aéronef, le train d'atterrissage à patins peut être muni d'une première traverse transversale et d'une deuxième traverse transversale reliant chacune le premier patin au deuxième patin.

La première traverse est dite « traverse avant » puisque cette première traverse relie au fuselage les zones situées à l'avant du premier patin longitudinal et du deuxième patin longitudinal. A l'inverse, la deuxième traverse est dite «traverse arrière » dans la mesure où cette deuxième traverse relie au fuselage les zones situées à l'arrière du premier patin longitudinal et du deuxième patin longitudinal.

Le train d'atterrissage est alors fixé à l'aéronef par ses traverses avant et arrière. Une traverse est un cadre de structure orienté transversalement.

Ces trains d'atterrissage permettent aux giravions de se poser sur de multiples types de surfaces.

Par ailleurs, un train d'atterrissage de giravion peut être principalement soumis à deux types de sollicitations lors de l'atterrissage : une sollicitation verticale liée à des moments et des efforts verticaux dirigés selon une direction verticale, et des sollicitations en roulis et en tangage liées à des moments et des efforts de roulis résultant des mouvements en roulis et en tangage du giravion.

Ces sollicitations notamment en roulis et en tangage peuvent être à l'origine du phénomène de résonance sol sur un giravion comportant un rotor de sustentation portant des pales articulées.

En effet, les modes des pales en traînée peuvent, dans certaines conditions bien particulières, se coupler de façon instable avec le mouvement du fuselage du giravion suivant les modes de déformations élastiques notamment en roulis du train d'atterrissage : c'est l'origine du phénomène dénommé « résonance sol » par l'homme du métier.

Lors du phénomène de résonance sol, les pales subissent un mouvement en traînée, c'est-à-dire dans le plan du rotor. Ce mouvement est déphasé entre les différentes pales et a alors pour conséquence de générer un balourd par le déplacement du centre de gravité du rotor hors de l'axe de rotation de ce rotor.

Ce balourd a pour effet de soumettre le giravion posé au sol sur son train d'atterrissage à une excitation (force tournante). Cette excitation provoque un mouvement du centre du rotor dans le plan du rotor et donc à un mouvement du fuselage. Dès lors, ce mouvement du centre rotor excite à nouveau les pales en traînée. L'ensemble fuselage et rotor devient alors un système totalement couplé et divergent. En quelques secondes et sous certaines conditions, le giravion peut se renverser en l'absence de moyens ou de décisions appropriées.

A propos de ces conditions, le rotor isolé du fuselage possède une fréquence propre en traînée *ω_{δ}*. Dans un repère fixe et pour une fréquence Ω de rotation du rotor, la fréquence d'excitation due au mouvement de traînée des pales (oscillations à leur fréquence propre *ω_{δ}*) vaut |Ω±*ω_{δ}*|.

Dès lors, une instabilité en roulis peut notamment se produire si la fréquence propre du fuselage sur son train d'atterrissage est voisine de |Ω-*ω_{δ}*|.

En particulier, le croisement entre la fréquence propre d'un mode de vibration du fuselage et la fréquence propre en traînée des pales génère un couplage instable si l'amortissement dudit mode de vibration du fuselage couplé au mode de traînée des pales est négatif.

Pour éviter l'instabilité, un constructeur peut rechercher à éviter le croisement de ces fréquences ou à obtenir un tel croisement pour une vitesse de rotation du rotor ne risquant pas de conduite à une instabilité. Pour obtenir ce résultat, le constructeur peut adapter la raideur en roulis et/ ou en tangage du train d'atterrissage.

Toutefois, l'adaptation des trains d'atterrissage peut être complexe. Un compromis doit notamment être trouvé entre d'une part la raideur verticale du train d'atterrissage qui gère le confort et le niveau de charge introduit dans la structure lors d'un atterrissage, et d'autre part les raideurs en tangage et en roulis qui sont très influentes sur le comportement en résonance sol.

On rappelle que l'homme du métier appelle « raideur verticale » la raideur du train d'atterrissage sous l'effet de tout sollicitation verticale selon l'axe en élévation de l'aéronef, à l'assiette statique près du giravion.

La mise au point d'un train d'atterrissage à patins est ainsi généralement longue et délicate. Cette mise au point est donc rarement remise en cause au cours de la vie de l'aéronef.

Cependant, des modifications substantielles d'un aéronef peuvent survenir au cours de sa vie, et induire par exemple une augmentation de la masse de l'aéronef. Les fréquences propres du fuselage en roulis et/ ou en tangage peuvent alors évoluer, en risquant de générer l'apparition du phénomène de résonance sol.

Dans ce cas, un constructeur peut tenter de modifier les raideurs du train d'atterrissage en roulis et/ ou en tangage, sans trop influencer le comportement de l'aéronef à l'atterrissage notamment.

A cet effet, des modifications géométriques peuvent être apportées à un train d'atterrissage à patins. Toutefois, ces modifications géométriques peuvent présenter l'inconvénient de modifier la raideur verticale du train d'atterrissage. Le comportement du train à l'atterrissage peut alors notamment être impacté.

Pour éviter alors l'apparition du phénomène de résonance sol, un constructeur peut rechercher à amortir les modes de vibration du fuselage, pour notamment repousser la limite de stabilité à des vitesses de rotation du rotor qui ne peuvent pas être atteintes au sol. Ce gain d'amortissement est aussi avantageux car ce gain permet de gagner en robustesse, le placement en fréquence des modes de vibration pouvant parfois être difficile à optimiser pour l'ensemble des configurations de l'aéronef et l'ensemble des types de posé au sol possible d'un giravion (atterrissage sur pente notamment).

Par exemple, on connait un amortisseur agencé directement entre un patin et un fuselage. L'efficacité de ce dispositif est modérée du fait du déplacement relatif faible entre les 2 points d'attache.

L'apport d'amortissement est néanmoins délicat à réaliser en raison des faibles amplitudes de déplacements du train d'atterrissage par rapport au fuselage. De plus, l'agencement de l'amortisseur peut augmenter les charges exercées sur la structure du fuselage relié à l'amortisseur, ce qui peut poser un problème en cas d'implantation sur une structure non dimensionnée à cet effet.

Le document US 6 244 538 présente un train d'atterrissage.

Ce document permet de positionner les fréquences propres du fuselage en roulis ou en tangage par rapport aux fréquences d'excitations en fonction du point de foisonnement de bielles supports.

Le document FR 2 554 210 présente une poutre flexible en matériaux composites ayant sensiblement la forme d'un caisson allongé de structure stratifiée. Deux semelles rigides sont reliées par deux voiles.

Un plot déformable d'absorption d'énergie est disposé entre les deux semelles, et comporte au moins un bloc d'un matériau élastomère à forte rémanence de déformation.

La poutre comprend de plus au moins un amortisseur viscoélastique monté sur la face externe de la semelle. Cet amortisseur est sollicité en traction par des bielles lors de la déformation en flexion de la poutre pour produire un amortissement s'ajoutant à l'amortissement assuré par chaque plot d'absorption d'énergie.

Ce montage suggère l'utilisation d'un élastomère au sein d'une traverse et au sein d'un amortisseur fixé sous la traverse.

Le document US 4 270 711 présente un train d'atterrissage muni d'une poutre reliée par un pivot à une traverse du train d'atterrissage de manière à pouvoir effectuer une rotation autour d'un axe. Les extrémités de la poutre sont alors fixées à la structure d'un aéronef.

Le document US 3 173 632 présente un train d'atterrissage muni de deux patins reliés par deux tiges de torsion. Chaque tige de torsion est solidaire de deux bras, chaque bras étant articulé à un montant s'élevant en élévation à partir d'un patin.

De plus, un moyen d'immobilisation peut autoriser ou empêcher une rotation de chaque tige de torsion autour de son axe de symétrie.

Le document FR 2 995 874 décrit un train d'atterrissage d'aéronef muni d'un premier patin et d'un deuxième patin ainsi que de deux traverses. Chaque traverse comporte une première branche solidarisée au premier patin ainsi qu'une deuxième branche solidarisée au deuxième patin et une portion centrale solidarisée à la première branche descendante et à la deuxième branche. Le train d'atterrissage comporte au moins un raidisseur ayant au moins une bielle et au moins un moyen de limitation de la déformation en roulis de la portion centrale d'une traverse, chaque moyen de limitation étant solidarisé à ladite portion centrale de la traverse, au moins une articulation principale articulant chaque bielle audit moyen de limitation et une articulation secondaire articulant chaque bielle à un point extérieur à la portion centrale afin de limiter la déformation de la portion centrale suite à un mouvement de roulis d'un aéronef.

On connait aussi un train d'atterrissage muni d'un premier patin, d'un deuxième patin, d'une traverse avant et d'une traverse arrière. Ce train d'atterrissage comporte au moins un raidisseur agencé sur une traverse, ledit raidisseur ayant deux balanciers comprenant chacun une d'extrémité externe solidarisée à la traverse. Le train d'atterrissage inclut deux moyens d'articulation pour articuler chaque balancier à une structure porteuse et un organe de liaison allongé s'étendant d'une première extrémité de liaison articulée au premier balancier vers une deuxième extrémité de liaison articulée au deuxième balancier.

Ces balanciers visent donc à raidir une traverse.

On connait aussi le document US 4,519,559.

Les documents EP 0 512 898 A1 (cf. le préambule de la revendication 1), US 3822048 et US 3716208 sont aussi connus.

La présente invention a alors pour objet de proposer un train d'atterrissage à patins muni d'au moins un amortisseur pour tenter de réduire le risque d'apparition du phénomène de résonance sol suite à un mouvement de roulis.

Selon l'invention, un train d'atterrissage d'aéronef est muni d'un premier patin longitudinal d'appui et d'un deuxième patin longitudinal d'appui ainsi que d'une traverse dite « traverse avant » et d'une traverse dite « traverse arrière » s'étendant chacune transversalement entre le premier patin et le deuxième patin.

Ce train d'atterrissage comporte au moins un dispositif d'amortissement agencé sur au moins une desdites traverses dénommée « traverse amortie » par commodité, ce dispositif d'amortissement comprenant :
- un moyen de démultiplication dit « premier moyen de démultiplication » et un moyen de démultiplication dit « deuxième moyen de démultiplication » pour démultiplier un mouvement de roulis d'un fuselage, chaque moyen de démultiplication étant articulé à la traverse amortie et étant apte à être articulé à un fuselage de l'aéronef,
- chaque moyen de démultiplication comportant :
   o une bielle de renvoi articulée à ladite traverse amortie par une articulation dite « première articulation » définissant un premier axe de rotation longitudinal, ladite bielle de renvoi étant pourvue d'un premier tronçon s'étendant d'une première extrémité libre vers un premier pied, ladite bielle de renvoi étant pourvue d'un deuxième tronçon s'étendant d'une deuxième extrémité libre vers un deuxième pied solidaire du premier pied, ladite première extrémité libre comprenant une articulation dite « deuxième articulation » définissant un deuxième axe de rotation longitudinal,
   ∘ une bielle de liaison s'étendant d'une première zone extrémale vers une deuxième zone extrémale, ladite première zone extrémale étant articulée à ladite deuxième extrémité libre par une articulation dite « troisième articulation » définissant un troisième axe de rotation longitudinal, ladite deuxième zone extrémale comprenant une articulation apte à être fixée audit fuselage dite « quatrième articulation » qui définit un quatrième axe de rotation longitudinal,
- un amortisseur articulé à la deuxième articulation du premier moyen de démultiplication et à la deuxième articulation du deuxième moyen de démultiplication.

Un moyen de démultiplication est donc un organe muni d'une bielle de liaison et d'une bielle de renvoi pour transmettre un mouvement de déplacement du fuselage à l'amortisseur.

Selon la variante, une traverse comporte un dispositif d'amortissement du type décrit précédemment, ou encore chaque traverse comporte un tel dispositif d'amortissement.

Une articulation définissant un axe de rotation doit être entendue comme représentant un organe autorisant au moins une rotation relative entre deux corps autour de cet axe de rotation. Par exemple, une articulation à roulement autorise une rotation autour d'un unique axe de rotation. Par contre, une articulation à rotule autorise une rotation autour de trois axes de rotation différents passant par un même centre de rotation.

Les bielles de renvoi sont fixées aux traverses plutôt qu'à une autre zone de la structure pour limiter les déformations locales qui auraient tendance à réduire les déplacements obtenus aux points d'accroche de l'amortisseur et donc l'efficacité du système.

L'articulation dite « première articulation » d'un moyen de démultiplication permet dans ces conditions au moins une rotation relative entre la bielle de renvoi de ce moyen de démultiplication et la traverse amortie.

L'articulation dite « deuxième articulation » d'un moyen de démultiplication permet au moins une rotation relative entre la bielle de renvoi de ce moyen de démultiplication et l'amortisseur.

L'articulation dite « troisième articulation » d'un moyen de démultiplication permet au moins une rotation relative entre la bielle de renvoi et la bielle de liaison de ce moyen de démultiplication.

L'articulation dite « quatrième articulation » d'un moyen de démultiplication permet au moins une rotation relative entre la bielle de liaison de ce moyen de démultiplication et le fuselage d'un aéronef. Plus particulièrement, chaque quatrième articulation articule un moyen de démultiplication à un cadre d'un fuselage.

L'expression « extrémité libre » est à interpréter au sens large en représentant une zone extrémale de l'organe associé incluant une extrémité en tant que telle de cet organe.

Le dispositif d'amortissement tend alors à apporter un amortissement sur les modes de vibration en roulis, sans contraindre le dimensionnement de la structure porteuse du fuselage par un apport de masse lié à la présence d'un amortisseur.

Lors d'un mouvement en roulis du fuselage au sol, les quatrièmes articulations des deux moyens de démultiplication d'un dispositif d'amortissement selon l'invention se déplacent selon des sens opposés. La cinématique des moyens de démultiplication induit alors un déplacement selon deux sens opposés des deuxièmes articulations de ces deux moyens de démultiplication.

Par suite, l'amortisseur s'étendant entre ces deuxièmes articulations produit un amortissement des mouvements en étant étiré ou comprimé.

Le dispositif d'amortissement apporte donc un amortissement sur le mode de vibration en roulis susceptible d'éviter l'apparition d'un phénomène de résonance sol.

En outre, l'amplitude des déplacements du train d'atterrissage par rapport au fuselage peuvent être faibles. Par conséquent, les moyens de démultiplication peuvent augmenter ces amplitudes pour solliciter de manière optimisée l'amortisseur.

Par contre, lors d'un mouvement vertical du fuselage ou en tangage suite à un atterrissage de l'aéronef, les quatrièmes articulations des deux moyens de démultiplication se déplacent éventuellement de la même manière. Par suite, les deuxièmes articulations des deux moyens de démultiplication se déplacent aussi de la même manière. Par suite, l'amortisseur présent entre ces deuxièmes articulations n'est pas sollicité.

Dès lors, le dispositif tend à ne pas introduire d'effort dans le fuselage lors d'un atterrissage réalisé avec une vitesse verticale importante. De même, lors d'une réponse en tangage de l'appareil, l'amortisseur ne produit pas d'amortissement.

Par conséquent, le dispositif d'amortissement ne génère pas une contrainte non désirée durant ces deux situations.

Par suite, l'invention tend à limiter les risques d'apparition de résonance sol suite à un mouvement en roulis d'un fuselage au sol, en ayant notamment un impact limité sur le fonctionnement de l'aéronef lors d'un atterrissage réalisé à une vitesse rapide par exemple.

L'invention tend alors à minimiser les déformations locales de la structure porteuse du fuselage ou du train d'atterrissage lors d'un tel atterrissage. L'invention peut donc être implémentée sur un aéronef existant en limitant les impacts sur le dimensionnement de cette structure porteuse.

L'invention est ainsi adaptable sur différents aéronefs.

Le train d'atterrissage peut de plus comporter une ou plusieurs des caractéristiques qui suivent.

Par exemple, le premier moyen de démultiplication et le deuxième moyen de démultiplication peuvent être identiques.

La bielle de liaison et la bielle de renvoi du premier moyen de démultiplication sont donc respectivement identiques à la bielle de liaison et à la bielle de renvoi du deuxième moyen de démultiplication.

Cette caractéristique permet de faciliter l'obtention de déplacements identiques des quatrièmes articulations des deux moyens de démultiplication d'un dispositif lors d'un atterrissage vertical.

Par ailleurs, une première distance en élévation séparant le premier axe de rotation d'un desdits moyens de démultiplication du deuxième axe de rotation de ce moyen de démultiplication, une deuxième distance en élévation séparant le troisième axe de rotation de ce moyen de démultiplication du quatrième axe de rotation de ce moyen de démultiplication, la première distance en élévation est supérieure à ladite deuxième distance en élévation.

Selon un autre aspect, au moins une desdites articulations est une articulation à rotule.

En particulier, toutes les articulations sont des articulations à rotule.

L'agencement d'articulations à rotule permet d'autoriser de petits désalignements, de tels désalignements pouvant contraindre une liaison à pivot.

Les articulations présentent favorablement un minimum de jeu et de frottement de façon à garantir le fonctionnement optimal du système. Ce jeu est établi par le constructeur de manière usuelle.

Toutefois, selon une autre alternative, au moins une desdites articulations comporte un palier lamifié.

Par ailleurs, au moins une bielle de renvoi présente une forme en L. Ainsi, un premier tronçon de la bielle de renvoi représente une branche de la forme en L, le deuxième tronçon formant l'autre branche de la forme en L

En outre, la première articulation d'une bielle de renvoi est éventuellement reliée à une jonction entre le premier pied et le deuxième pied de cette bielle de renvoi.

Lorsque la bielle de renvoi a une forme en L comprenant deux branches se rejoignant au niveau d'une jonction formant un angle droit, la première articulation est reliée à cette jonction.

Par ailleurs, une première distance en élévation séparant le premier axe de rotation d'un desdits moyens de démultiplication du deuxième axe de rotation de ce moyen de démultiplication, une longueur transversale séparant le premier axe de rotation de ce moyen de démultiplication du troisième axe de rotation de ce moyen de démultiplication, ladite première distance est égale à ladite longueur transversale.

Ainsi, le premier tronçon et le deuxième tronçon d'une bielle de renvoi ont une même longueur.

Toutefois, la première distance et la longueur transversale peuvent être différentes.

Un rapport important entre la première distance et la longueur transversale permet ainsi de démultiplier le déplacement généré au niveau de l'amortisseur et donc d'augmenter son efficacité. De façon simplifiée, si on considère une intégration symétrique, l'amortissement apporté est sensiblement proportionnel à ce rapport à la puissance deux.

En adaptant ce rapport, un constructeur peut ainsi régler le dispositif d'amortissement afin d'obtenir l'amortissement requis.

Selon un autre aspect, le premier moyen de démultiplication et le deuxième moyen de démultiplication sont agencés de part et d'autre d'un plan de symétrie antéropostérieur de la traverse amortie.

Avec cet agencement, une rotation du fuselage par rapport au train d'atterrissage autour d'un axe de roulis longitudinal proche du plan de symétrie antéropostérieur induit des déplacements opposés de la deuxième articulation du premier moyen de démultiplication et de la deuxième articulation du deuxième moyen de démultiplication.

Selon un autre aspect, le deuxième tronçon dudit premier moyen de démultiplication s'étend transversalement à partir de la première articulation du premier moyen de démultiplication en se rapprochant d'un plan de symétrie antéropostérieur de ladite traverse amortie, le deuxième tronçon dudit deuxième moyen de démultiplication s'étendant transversalement à partir de la première articulation du deuxième moyen de démultiplication en s'éloignant dudit plan de symétrie antéropostérieur.

Par suite, le plan de symétrie antéropostérieur de la traverse amortie ne représente pas un plan de symétrie du premier moyen de démultiplication par rapport au deuxième moyen de démultiplication.

Par ailleurs, le deuxième tronçon du premier moyen de démultiplication est agencé en vol dans l'alignement du deuxième tronçon du deuxième moyen de démultiplication.

En outre, le premier tronçon du premier moyen de démultiplication, le premier tronçon du deuxième moyen de démultiplication, la bielle de liaison du premier moyen de démultiplication et la bielle de liaison dudit deuxième moyen de démultiplication sont en vol parallèles les uns aux autres.

Par ailleurs, la traverse amortie ayant une première branche descendante solidarisée au premier patin ainsi qu'une deuxième branche descendante solidarisée au deuxième patin et une portion centrale sensiblement horizontale s'étendant entre la première branche et la deuxième branche, chaque moyen de démultiplication est articulé à la portion centrale.

Par exemple, chaque moyen de démultiplication est articulé à la portion centrale au plus près d'une branche descendante pour maximiser la sollicitation de l'amortisseur.

Par ailleurs, la traverse amortie peut comporter un unique système de fixation pour être fixée audit fuselage.

Un tel système de fixation autorise une rotation du fuselage par rapport au train d'atterrissage. On se référera à la littérature pour trouver des exemples de fixation de ce type.

Dès lors, le train d'atterrissage peut être fixé à la traverse des trois systèmes de fixation. Plus précisément, une traverse est attachée au fuselage par deux systèmes de fixation, l'autre traverse étant fixée au fuselage par un seul système de fixation.

Par suite, un dispositif d'amortissement est au moins agencé sur la traverse fixée au fuselage par un seul système de fixation. Les niveaux de déplacements obtenus sur un mouvement de roulis entre le fuselage et le train d'atterrissage sont en effet plus importants au niveau d'une telle traverse, ce qui permet de maximiser l'amortissement produit.

Toutefois, la traverse amortie peut comporter deux systèmes de fixation pour être fixée au fuselage.

Le dispositif d'amortissement peut encore fonctionner mais avec une efficacité moindre que dans le cas précédent car les mouvements relatifs entre le fuselage et le train d'atterrissage sont plus faibles au niveau d'une telle traverse.

Selon un autre aspect, l'amortisseur peut être un amortisseur hydraulique.

L'amortisseur est de type hydraulique pour maximiser l'apport d'amortissement

Selon une autre alternative, l'amortisseur est un amortisseur comportant un organe viscoélastique.

L'amortisseur est alors de type viscoélastique. Un tel amortisseur apporte de la raideur en plus de l'amortissement. Un tel amortisseur peut alors être utilisé pour augmenter la fréquence du mode de vibration en roulis si nécessaire.

Outre un train d'atterrissage, l'invention vise un aéronef muni d'un fuselage. Cet aéronef comporte alors un train d'atterrissage selon l'invention attaché au fuselage, chaque troisième articulation étant articulée au fuselage. En particulier, chaque traverse du train d'atterrissage est attachée à un cadre du fuselage.

L'invention et ses avantages apparaîtront avec plus de détails dans le cadre de la description qui suit avec des exemples donnés à titre illustratif en référence aux figures annexées qui représentent :
- la figure 1, un schéma représentant un aéronef selon l'invention,
- la figure 2, un schéma présentant un train d'atterrissage selon l'invention au repos, à savoir un train d'atterrissage ne reposant pas sur un sol et donc non déformé,
- la figure 3, un schéma présentant un train d'atterrissage selon l'invention sollicité verticalement lors d'un atterrissage,
- la figure 4, un schéma présentant un train d'atterrissage selon l'invention sollicité en roulis lors d'un atterrissage, et
- la figure 5 une vue d'un dispositif d'amortissement coopérant avec une traverse reliée à un fuselage par deux systèmes de fixation.

Les éléments présents dans plusieurs figures distinctes sont affectés d'une seule et même référence.

On note que trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

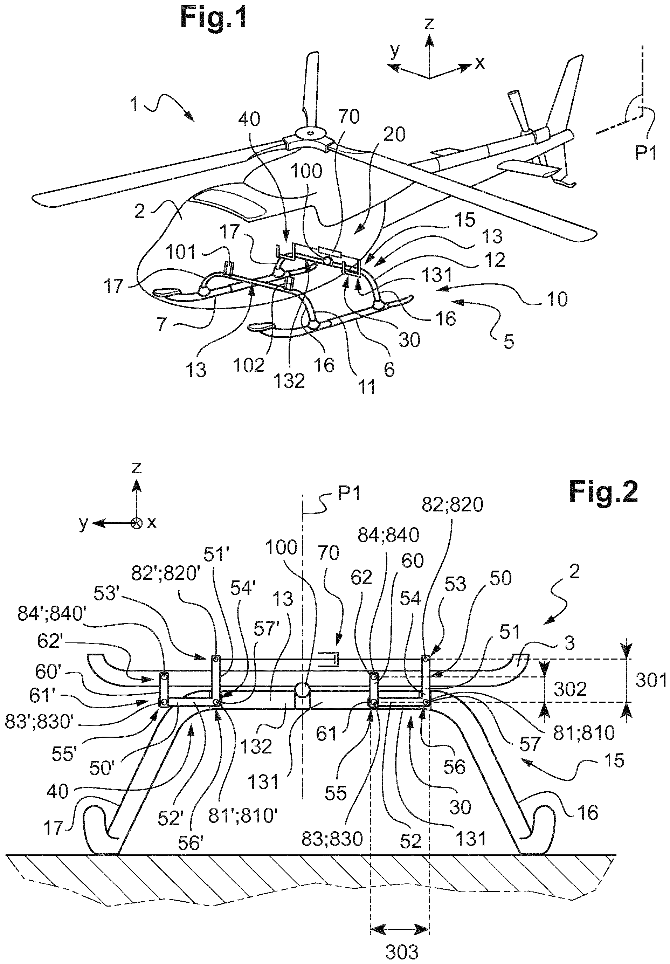

La figure 1 présente un aéronef 1, et plus particulièrement un giravion.

Cet aéronef 1 est muni d'un fuselage 2 qui s'étend longitudinalement le long d'un plan de symétrie antéropostérieur P1. De plus, le fuselage 2 est solidaire d'un train d'atterrissage 5 à patins. En particulier, le train d'atterrissage 5 est attaché à des cadres 3 du fuselage 2 visibles sur les figures 2 à 5.

On note qu'une partie du fuselage 2 a été rendue transparente sur la figure 1 pour permettre la visualisation du train d'atterrissage 5.

Ce train d'atterrissage 5 comporte un premier patin 6 longitudinal d'appui et un deuxième patin 7 longitudinal d'appui.

Dès lors, le train d'atterrissage comprend deux traverses 10 transversales reliant le premier patin 6 et le deuxième patin 7, à savoir une traverse avant 11 transversale et une traverse arrière 12 transversale.

Chaque traverse 10 est pourvue d'une première branche 16 qui est solidarisée au premier patin 6, et d'une deuxième branche 17 solidarisée au deuxième patin 7.

De plus, chaque traverse schématisée est continue en comportant une portion centrale 13 solidarisée à la première branche 16 et à la deuxième branche descendante 17. Les branches sont parfois dénommées « branches descendantes » dans la mesure où ces branches s'étendent de la portion centrale vers un patin en se rapprochant du sol.

Chaque portion centrale peut être décomposée en un premier segment latéral 131 relié à la première branche descendante et en un deuxième segment latéral 132 relié à la deuxième branche descendante, le premier segment latéral 131 et le deuxième segment latéral 132 étant joints au niveau du plan de symétrie antéropostérieur P1.

Indépendamment de la réalisation, le train d'atterrissage 5 est alors relié à une structure porteuse de l'aéronef. Chaque traverse est ainsi par exemple fixée à un cadre de l'aéronef par un au moins un système de fixation. Ainsi, une traverse est fixée par deux systèmes de fixation 101, 102 à un cadre, et l'autre traverse est fixée par au moins un système de fixation 100 à un autre cadre.

Selon l'invention, ce train d'atterrissage 5 est muni d'au moins un dispositif d'amortissement 20 coopérant avec une traverse 10. Une traverse 10 coopérant avec un dispositif d'amortissement est dénommée par commodité « traverse amortie 15 » pour être identifiée plus facilement.

Un dispositif d'amortissement 20 est simplement représenté de manière schématique sur la traverse arrière sur la figure 1 pour ne pas alourdir la représentation.

Selon la variante des figures 2 à 4, la traverse amortie peut comporter un unique système de fixation 100 pour être fixée au fuselage.

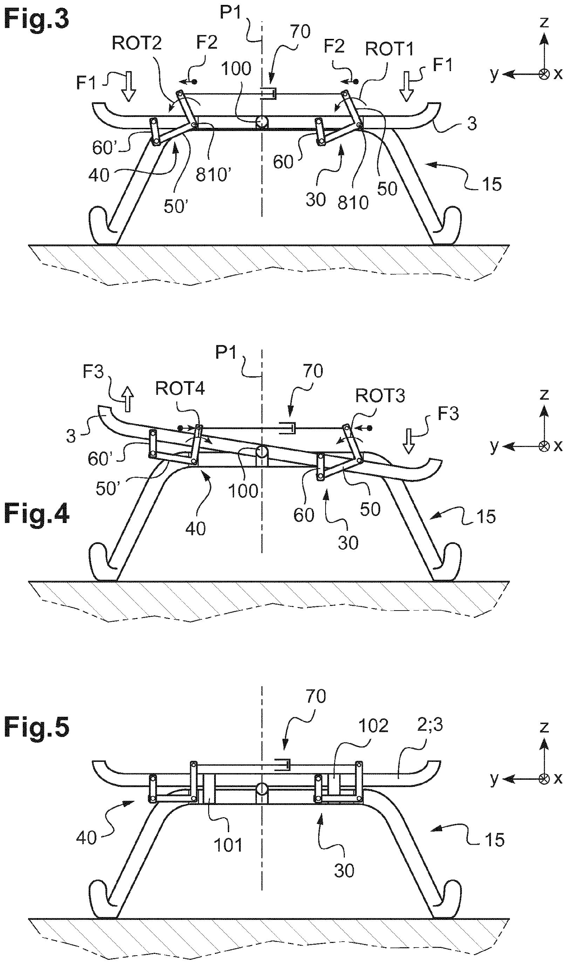

Par contre, selon la variante de la figure 5, la traverse amortie 15 comporte deux systèmes de fixation 101, 102 pour être fixée au fuselage.

Indépendamment de la variante et en référence à la figure 2, un dispositif d'amortissement 20 comporte deux moyens de démultiplication dénommés respectivement « premier moyen de démultiplication 30 » et « deuxième moyen de démultiplication 40 ».

Le premier moyen de démultiplication 30 et le deuxième moyen de démultiplication 40 sont chacun articulés à la traverse amortie 15 et au fuselage 2, en particulier à un cadre 3 de ce fuselage 2.

De plus, chaque moyen de démultiplication 30, 40 comporte une bielle de renvoi 50, 50' articulée à la traverse amortie 15. De plus, chaque moyen de démultiplication 30, 40 comporte une bielle de liaison articulée d'une part au fuselage et d'autre part à la bielle de renvoi du moyen de démultiplication 30, 40 correspondant.

Chaque bielle de renvoi 50, 50' est ainsi articulée à la traverse amortie 15 par une articulation dite « première articulation 81, 81' » définissant au moins un premier axe de rotation 810, 810' longitudinal.

Chaque première articulation peut comprendre une articulation à rotule ou un palier lamifié par exemple.

De manière usuelle, une articulation à rotule comporte une bille partiellement sphérique agencée dans une cage. La cage est fixée à un premier organe et la bille à un deuxième organe mobile par rapport au premier organe. On se référera à la littérature pour obtenir des descriptions d'articulations à rotule.

Un palier lamifié comporte un organe comprenant une succession de couches rigides et de couches élastiques à base d'élastomère par exemple. On se référera à la littérature pour obtenir des descriptions de paliers lamifiés.

De plus, chaque bielle de renvoi est pourvue d'un premier tronçon 51, 51' et d'un deuxième tronçon 52, 52' présentant une angulation l'un par rapport à l'autre.

Par exemple, cette angulation est un angle droit. Par suite, la bielle de renvoi a alors une forme d'équerre en L.

Plus précisément, le premier tronçon 51, 51' d'une bielle de renvoi s'étend d'une première extrémité libre 53, 53' vers un premier pied 54, 54'.

Chaque première extrémité libre 53, 53' est alors reliée à une articulation dite « deuxième articulation 82, 82' » définissant au moins un deuxième axe de rotation 820, 820' longitudinal. Chaque deuxième articulation peut comprendre une articulation à rotule ou un palier lamifié par exemple.

Le deuxième tronçon 52, 52' de la bielle de renvoi s'étend en outre d'une deuxième extrémité libre 55 vers un deuxième pied 56 solidaire du premier pied 54 au niveau d'une jonction 57, 57'.

La première articulation 81, 81' de la bielle de renvoi à une traverse amortie est alors par exemple reliée à cette jonction 57, 57'.

Dès lors, chaque bielle de liaison 60, 60' s'étend d'une première zone extrémale 61, 61' vers une deuxième zone extrémale 62, 62'. La première zone extrémale 61, 61' d'une bielle de liaison est alors articulée à la deuxième extrémité libre 55, 55' d'une bielle de renvoi par une articulation dite « troisième articulation 83, 83' définissant au moins un troisième axe de rotation 830, 830' longitudinal. Chaque troisième articulation peut comprendre une articulation à rotule ou un palier lamifié par exemple.

Enfin, la deuxième zone extrémale 62, 62' comprend une articulation fixée au fuselage 2 dite « quatrième articulation 84 ». Cette quatrième articulation 84 définit un quatrième axe de rotation 840, 840' longitudinal. Chaque quatrième articulation peut comprendre une articulation à rotule ou un palier lamifié par exemple.

Par suite, le premier moyen de démultiplication 30 comporte une bielle de renvoi 50 articulée à la traverse amortie autour d'un premier axe de rotation 810 par une première articulation 81. De plus, le premier moyen de démultiplication 30 comporte une bielle de liaison articulée par une troisième articulation 83 à la bielle de renvoi 50 autour d'un troisième axe de rotation 830. En outre, la bielle de liaison est articulée au fuselage par une quatrième articulation 84 autour d'un quatrième axe de rotation 840.

De même, le deuxième moyen de démultiplication 40 comporte une bielle de renvoi 50' articulée à la traverse amortie autour d'un premier axe de rotation 810' par une première articulation 81'. De plus, le deuxième moyen de démultiplication 40 comporte une bielle de liaison articulée par une troisième articulation 83' à la bielle de renvoi 50' autour d'un troisième axe de rotation 830'. En outre, la bielle de liaison est articulée au fuselage par une quatrième articulation 84' autour d'un quatrième axe de rotation 840'.

Par ailleurs, le premier moyen de démultiplication 30 et le deuxième moyen de démultiplication 40 peuvent être identiques.

En outre, le premier moyen de démultiplication 30 et le deuxième moyen de démultiplication 40 sont éventuellement agencés de part et d'autre d'un plan de symétrie antéropostérieur P1 de la traverse amortie 15.

La traverse amortie 15 de la figure 2 possède une première branche 16 descendante solidarisée au premier patin 6 ainsi qu'une deuxième branche 17 descendante solidarisée au deuxième patin 7 et une portion centrale 13 s'étendant entre la première branche 16 et la deuxième branche 17. Chaque moyen de démultiplication 30, 40 est alors articulé à ladite portion centrale 13. Plus précisément, le premier moyen de démultiplication 30 est articulé au premier segment latéral 131 de la portion centrale relié à la première branche descendante 16, et le deuxième moyen de démultiplication 40 est articulé au deuxième segment latéral 132 de la portion centrale relié à la deuxième branche descendante 17.

Dès lors, le deuxième tronçon 52 du premier moyen de démultiplication 30 s'étend par exemple transversalement à partir de la première articulation 81 du premier moyen de démultiplication 30 en se rapprochant d'un plan de symétrie antéropostérieur P1 de la traverse amortie 15. Par contre, le deuxième tronçon 52' du deuxième moyen de démultiplication 40 s'étend transversalement à partir de la première articulation 81' du deuxième moyen de démultiplication 40 en s'éloignant dudit plan de symétrie antéropostérieur P1.

Par ailleurs, chaque moyen de démultiplication peut avoir une forme en U lorsque le train d'atterrissage ne repose pas sur le sol.

Dès lors, le deuxième tronçon 52 du premier moyen de démultiplication 30 est agencé en vol dans l'alignement du deuxième tronçon 52' du deuxième moyen de démultiplication.

De plus, le premier tronçon 51 du premier moyen de démultiplication 30, le premier tronçon 51' du deuxième moyen de démultiplication 40, la bielle de liaison 60 du premier moyen de démultiplication 30 et la bielle de liaison 60' du deuxième moyen de démultiplication 40 sont en vol parallèles les uns aux autres et sensiblement verticaux. A l'inverse, la portion centrale est sensiblement horizontale.

En outre, au moins un moyen de démultiplication peut présenter des dimensions particulières. Ces dimensions sont illustrées sur la figure 2 avec le premier moyen de démultiplication. Néanmoins, le deuxième moyen de démultiplication peut aussi présenter les caractéristiques suivantes.

Ainsi, dans une coupe en élévation réalisée dans le plan YZ de la feuille contenant la figure 2, une première distance 301 en élévation sépare le premier axe de rotation 810 d'un des moyens de démultiplication 30 du deuxième axe de rotation 820 de ce moyen de démultiplication 30.

De plus, une deuxième distance 302 en élévation sépare ledit troisième axe de rotation 830 de ce moyen de démultiplication 30 du quatrième axe de rotation 840' de ce moyen de démultiplication 30.

Dès lors, la première distance 301 en élévation est éventuellement supérieure à la deuxième distance 302 en élévation.

De plus, une longueur transversale 303 sépare le premier axe de rotation 810 de ce moyen de démultiplication 30 du troisième axe de rotation 830 de ce moyen de démultiplication 30.

Par suite, la première distance 301 est éventuellement égale à ladite longueur transversale 303.

Par ailleurs, chaque dispositif d'amortissement 20 comporte un amortisseur 70. Cet amortisseur 70 est alors articulé à la deuxième articulation 82 du premier moyen de démultiplication 30 du dispositif d'amortissement et à la deuxième articulation 82' du deuxième moyen de démultiplication 40 de ce dispositif d'amortissement.

L'amortisseur 70 est soit un amortisseur hydraulique soit un amortisseur comportant un organe viscoélastique. Un tel amortisseur hydraulique peut contenir un piston délimitant au moins une chambre remplie par un fluide. Un amortisseur de type viscoélastique comporte par exemple un piston en contact contre un organe viscoélastique.

Les figures 3 à 4 illustrent le fonctionnement de l'invention.

Durant un atterrissage vertical illustré sur la figure 3, le fuselage tend à se rapprocher de la traverse amortie en se déplaçant verticalement selon la flèche F1.

Ce déplacement induit des déplacements identiques des bielles de liaison 60, 60' des moyens de démultiplication 30, 40. Par conséquent, les bielles de renvoi 50, 50' des moyens de démultiplication 30, 40 effectuent deux rotations identiques ROT1, ROT2 respectivement autour de leur premier axe de rotation.

L'amortisseur 70 est alors translaté selon les flèches F2 sans être comprimé ou étendu.

Durant un mouvement de roulis illustré sur la figure 4, le fuselage tend à s'incliner par rapport à la traverse amortie, cette rotation étant illustrée par les flèches F3.

Les bielles de liaison 60, 60' demeurent dans une position sensiblement verticale.

Par contre, les bielles de renvoi 50, 50' des moyens de démultiplication 30, 40 effectuent deux rotations opposées ROT3, ROT4 respectivement autour de leur premier axe de rotation.

L'amortisseur 70 est alors soit étendu soit comprimé selon la réalisation de la figure 4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la traverse amortie peut être une traverse discontinue. Une telle traverse discontinue peut comporter une portion centrale comportant deux segments séparés l'un de l'autre transversalement.

## Revendications

1. Train d'atterrissage (5) d'aéronef (1) muni d'un premier patin (6) longitudinal d'appui et d'un deuxième patin (7) longitudinal d'appui ainsi que d'une traverse (10) dite « traverse avant (11) » et d'une traverse (10) dite « traverse arrière (12) » s'étendant chacune transversalement entre le premier patin (6) et le deuxième patin (7), ce train d'atterrissage (5) comportant au moins un dispositif d'amortissement (20) agencé sur au moins une desdites traverses (10) dénommée « traverse amortie (15) ledit dispositif d'amortissement comprenant un amortisseur, **caractérisé en ce que** ledit dispositif d'amortissement (20) comprend :
- un moyen de démultiplication dit « premier moyen de démultiplication (30) » et un moyen de démultiplication dit « deuxième moyen de démultiplication (40) », chaque moyen de démultiplication (30,40) étant articulé à ladite traverse amortie (15) et étant apte à être articulé à un fuselage (2) dudit aéronef (1),
- chaque moyen de démultiplication (30, 40) comportant :
∘ une bielle de renvoi (50, 50') articulée à ladite traverse amortie (15) par une articulation dite «première articulation (81, 81') » définissant un premier axe de rotation (810,810') longitudinal, ladite bielle de renvoi (50, 50') étant pourvue d'un premier tronçon (51, 51') s'étendant d'une première extrémité libre (53, 53') vers un premier pied (54 , 54'), ladite bielle de renvoi (50, 50') étant pourvue d'un deuxième tronçon (52, 52') s'étendant d'une deuxième extrémité libre (55, 55') vers un deuxième pied (56, 56') solidaire du premier pied (54), ladite première extrémité libre (53) comprenant une articulation dite « deuxième articulation (82, 82') » définissant un deuxième axe de rotation (820, 820') longitudinal,
∘ une bielle de liaison (60, 60') s'étendant d'une première zone extrémale (61, 61') vers une deuxième zone extrémale (62, 62'), ladite première zone extrémale (61, 61') étant articulée à ladite deuxième extrémité libre (55, 55') par une articulation dite « troisième articulation (83, 83') » définissant un troisième axe de rotation (830, 830') longitudinal, ladite deuxième zone extrémale (62, 62') comprenant une articulation apte à être fixée audit fuselage (2) dite « quatrième articulation (84, 84') » qui définit un quatrième axe de rotation (840, 840') longitudinal,
- l'amortisseur (70) articulé à la deuxième articulation (82) du premier moyen de démultiplication (30) et à la deuxième articulation (82') du deuxième moyen de démultiplication (40).

2. Train d'atterrissage (5) selon la revendication 1, **caractérisé en ce que** le premier moyen de démultiplication (30) et le deuxième moyen de démultiplication (40) sont identiques.

3. Train d'atterrissage (5) selon l'une quelconque des revendications 1 à 2,
**caractérisé en ce qu'**une première distance (301) en élévation séparant ledit premier axe de rotation (810) d'un desdits moyens de démultiplication (30) du deuxième axe de rotation (820) de ce moyen de démultiplication (30), une deuxième distance (302) en élévation séparant ledit troisième axe de rotation (830) de ce moyen de démultiplication (30) du quatrième axe de rotation (840) de ce moyen de démultiplication (30), ladite première distance (301) en élévation est supérieure à ladite deuxième distance (302) en élévation.

4. Train d'atterrissage (5) selon l'une quelconque des revendications 1 à 3,
**caractérisé en ce qu'**au moins une desdites articulations (81, 82, 83, 84, 81', 82', 83', 84') est une articulation à rotule.

5. Train d'atterrissage (5) selon l'une quelconque des revendications 1 à 4,
**caractérisé en ce qu'**au moins une desdites articulations (81, 82, 83, 84, 81', 82', 83', 84') comporte un palier lamifié.

6. Train d'atterrissage (5) selon l'une quelconque des revendications 1 à 5,
**caractérisé en ce qu'**au moins une bielle de renvoi (50, 50') présente une forme en L.

7. Train d'atterrissage (5) selon l'une quelconque des revendications 1 à 6,
**caractérisé en ce que** ladite première articulation (81, 81') d'une bielle de renvoi (50, 50') est reliée à une jonction (57, 57') entre ledit premier pied (54, 54') et le deuxième pied (56, 56') de cette bielle de renvoi (50, 50').

8. Train d'atterrissage (5) selon l'une quelconque des revendications 1 à 7,
**caractérisé en ce qu'**une première distance (301) en élévation séparant ledit premier axe de rotation (810) d'un desdits moyens de démultiplication (30) du deuxième axe de rotation (820) de ce moyen de démultiplication (30), une longueur transversale (303) séparant ledit premier axe de rotation (810) de ce moyen de démultiplication (30) du troisième axe de rotation (830) de ce moyen de démultiplication (30), ladite première distance (301) est égale à ladite longueur transversale (303).

9. Train d'atterrissage (5) selon l'une quelconque des revendications 1 à 7,
**caractérisé en ce qu'**une première distance (301) en élévation séparant ledit premier axe de rotation (810) d'un desdits moyens de démultiplication (30) du deuxième axe de rotation (820) de ce moyen de démultiplication (30), une longueur transversale (303) séparant ledit premier axe de rotation (810) de ce moyen de démultiplication (30) du troisième axe de rotation (830) de ce moyen de démultiplication (30), ladite première distance (301) est différente de ladite longueur transversale (303).

10. Train d'atterrissage (5) selon l'une quelconque des revendications 1 à 9,
**caractérisé en ce que** le premier moyen de démultiplication (30) et le deuxième moyen de démultiplication (40) sont agencés de part et d'autre d'un plan de symétrie antéropostérieur (P1) de ladite traverse amortie (15).

11. Train d'atterrissage (5) selon l'une quelconque des revendications 1 à 10,
**caractérisé en ce que** ledit deuxième tronçon (52) dudit premier moyen de démultiplication (30) s'étend transversalement à partir de la première articulation (81) du premier moyen de démultiplication (30) en se rapprochant d'un plan de symétrie antéropostérieur (P1) de ladite traverse amortie (15), ledit deuxième tronçon (52') dudit deuxième moyen de démultiplication (40) s'étendant transversalement à partir de la première articulation (81') du deuxième moyen de démultiplication (40) en s'éloignant dudit plan de symétrie antéropostérieur (P1).

12. Train d'atterrissage (5) selon l'une quelconque des revendications 1 à 11,
**caractérisé en ce que** ledit deuxième tronçon (52) dudit premier moyen de démultiplication (30) est agencé en vol dans l'alignement dudit deuxième tronçon (52') dudit deuxième moyen de démultiplication (40).

13. Train d'atterrissage (5) selon l'une quelconque des revendications 1 à 12,
**caractérisé en ce que** ledit premier tronçon (51) dudit premier moyen de démultiplication (30), ledit premier tronçon (51') dudit deuxième moyen de démultiplication (40), ladite bielle de liaison (60) dudit premier moyen de démultiplication (30) et la bielle de liaison (60') dudit deuxième moyen de démultiplication (40) sont en vol parallèles les uns aux autres.

14. Train d'atterrissage (5) selon l'une quelconque des revendications 1 à 13,
**caractérisé en ce que** ladite traverse amortie (15) ayant une première branche (16) descendante solidarisée au premier patin (6) ainsi qu'une deuxième branche (17) descendante solidarisée au deuxième patin (7) et une portion centrale (13) s'étendant entre la première branche (16) et la deuxième branche (17), chaque moyen de démultiplication (30, 40) est articulé à ladite portion centrale (13).

15. Train d'atterrissage (5) selon l'une quelconque des revendications 1 à 14,
**caractérisé en ce que** ladite traverse amortie (15) comporte un unique système de fixation (100) pour être fixée audit fuselage.

16. Train d'atterrissage (5) selon l'une quelconque des revendications 1 à 15,
**caractérisé en ce que** ladite traverse amortie (15) comporte deux systèmes de fixation (101, 102) pour être fixée audit fuselage.

17. Train d'atterrissage (5) selon l'une quelconque des revendications 1 à 16,
**caractérisé en ce que** ledit amortisseur (70) est un amortisseur hydraulique.

18. Train d'atterrissage (5) selon l'une quelconque des revendications 1 à 17,
**caractérisé en ce que** ledit amortisseur (70) est un amortisseur comportant un organe viscoélastique.

19. Aéronef (1) muni d'un fuselage (2),
**caractérisé en ce que** ledit aéronef (1) comporte un train d'atterrissage (5) selon l'une quelconque de revendications 1 à 18 attachée audit fuselage, chaque troisième articulation (83) étant articulée audit fuselage (2).

## Patentansprüche

1. Landegestell (5) eines Flugzeugs (1) mit einer ersten Längs-Auflagekufe (6) und einer zweiten Längs-Auflagekufe (7) sowie einem "vorderen Querträger (11)" genannten Querträger (10) und einem "hinterer Querträger (12)" genannten Querträger (10), die sich jeweils quer zwischen der ersten Kufe (6) und der zweiten Kufe (7) erstrecken, wobei dieses Landegestell (5) mindestens eine Dämpfungsvorrichtung (20) aufweist, die auf mindestens einem "gedämpfter Querträger (15)" genannten Querträger (10) angeordnet ist, wobei die Dämpfungsvorrichtung einen Stoßdämpfer aufweist, **dadurch gekennzeichnet, dass** die Dämpfungsvorrichtung (20) aufweist:
- ein "erstes Untersetzungsmittel (30)" genanntes Untersetzungsmittel und ein "zweites Untersetzungsmittel (40)" genanntes Untersetzungsmittel, wobei jedes Untersetzungsmittel (30, 40) an dem gedämpften Querträger (15) angelenkt ist und an einem Rumpf (2) des Flugzeugs (1) anlenkbar ist,
- wobei jedes Untersetzungsmittel (30, 40) aufweist:
∘ eine Rückholstange (50, 50'), die an dem gedämpften Querträger (15) über ein "erstes Gelenk (81, 81')" genanntes Gelenk angelenkt ist, das eine erste Längsdrehachse (810, 810') definiert, wobei die Rückholstange (50, 50') mit einem ersten Abschnitt (51, 51') versehen ist, der sich von einem ersten freien Ende (53, 53') zu einem ersten Fuß (54, 54') erstreckt, wobei die Rückholstange (50, 50') mit einem zweiten Abschnitt (52, 52') versehen ist, der sich von einem zweiten freien Ende (55, 55') zu einem zweiten Fuß (56, 56') erstreckt, der mit dem ersten Fuß (54) fest verbunden ist, wobei das erste freie Ende (53) ein "zweites Gelenk (82, 82')" genanntes Gelenk aufweist, das eine zweite Längsdrehachse (820, 820') definiert,
∘ eine Verbindungsstange (60, 60'), die sich von einem ersten Endbereich (61, 61') zu einem zweiten Endbereich (62, 62') hin erstreckt, wobei der erste Endbereich (61, 61') an dem zweiten freien Ende (55, 55') über ein "drittes Gelenk (83, 83')" genanntes Gelenk angelenkt ist, das eine dritte Längsdrehachse (830, 830') definiert, wobei der zweite Endbereich (62, 62') ein "viertes Gelenk (84, 84')" genanntes Gelenk aufweist, das an dem Rumpf (2) befestigt werden kann, welches eine vierte Längsdrehachse (840, 840') definiert,
- wobei der Stoßdämpfer (70) an dem zweiten Gelenk (82) des ersten Untersetzungsmittels (30) und an dem zweiten Gelenk (82') des zweiten Untersetzungsmittels (40) angelenkt ist.

2. Landegestell (5) nach Anspruch 1,
**dadurch gekennzeichnet, dass** das erste Untersetzungsmittel (30) und das zweite Untersetzungsmittel (40) identisch sind.

3. Landegestell (5) nach einem der Ansprüche 1 bis 2,
**dadurch gekennzeichnet, dass** ein erster Abstand (301) in Höhenrichtung die erste Drehachse (810) eines der Untersetzungsmittel (30) von der zweiten Drehachse (820) dieses Untersetzungsmittels (30) trennt, ein zweiter Abstand (302) in Höhenrichtung die dritte Drehachse (830) dieses Untersetzungsmittels (30) von der vierten Drehachse (840) dieses Untersetzungsmittels (30) trennt, wobei der erste Abstand (301) in Höhenrichtung größer ist als der zweite Abstand (302) in Höhenrichtung.

4. Landegestell (5) nach einem der Ansprüche 1 bis 3,
**dadurch gekennzeichnet, dass** mindestens eines der Gelenke (81, 82, 83, 84, 81', 82', 83', 84') ein Kugelgelenk ist.

5. Landegestell (5) nach einem der Ansprüche 1 bis 4,
**dadurch gekennzeichnet, dass** mindestens eines der Gelenke (81, 82, 83, 84, 81', 82', 83', 84') ein laminiertes Lager aufweist.

6. Landegestell (5) nach einem der Ansprüche 1 bis 5,
**dadurch gekennzeichnet, dass** mindestens eine Rückholstange (50, 50') die Form eines L aufweist.

7. Landgestell (5) nach einem der Ansprüche 1 bis 6,
**dadurch gekennzeichnet, dass** das erste Gelenk (81, 81') einer Rückholstange (50, 50') verbunden ist mit einer Verbindung (57, 57') zwischen dem ersten Fuß (54, 54') und dem zweiten Fuß (56, 56') dieser Rückholstange (50, 50').

8. Landegestell (5) nach einem der Ansprüche 1 bis 7,
**dadurch gekennzeichnet, dass** ein erster Abstand (301) in Höhenrichtung die erste Drehachse (810) eines der Untersetzungsmittel (30) von der zweiten Drehachse (820) dieses Untersetzungsmittels (30) trennt, wobei eine Querlänge (303) die erste Drehachse (810) dieses Untersetzungsmittels (30) von der dritten Drehachse (830) dieses Untersetzungsmittels (30) trennt, wobei der erste Abstand (301) gleich der Querlänge (303) ist.

9. Landegestell (5) nach einem der Ansprüche 1 bis 7,
**dadurch gekennzeichnet, dass** ein erster Abstand (301) in Höhenrichtung die erste Drehachse (810) eines der Untersetzungsmittel (30) von der zweiten Drehachse (820) dieses Untersetzungsmittels (30) trennt, wobei eine Querlänge (303) die erste Drehachse (810) dieses Untersetzungsmittels (30) von der dritten Drehachse (830) dieses Untersetzungsmittels (30) trennt, wobei der erste Abstand (301) von der Querlänge (303) verschieden ist.

10. Landegestell (5) nach einem der Ansprüche 1 bis 9,
**dadurch gekennzeichnet, dass** das erste Untersetzungsmittel (30) und das zweite Untersetzungsmittel (40) auf der einen und der anderen Seite der zu dem gedämpften Querträger (15) anteroposterioren Symmetrieebene angeordnet sind.

11. Landegestell (5) nach einem der Ansprüche 1 bis 10,
**dadurch gekennzeichnet, dass** der zweite Abschnitt (52) des ersten Untersetzungsmittels (30) sich quer, ausgehend von dem ersten Gelenk (81) des ersten Untersetzungsmittels (30), sich der zu dem gedämpften Querträger (15) anteroposterioren Symmetrieebene (P1) nähernd erstreckt, wobei der zweite Abschnitt (52') des zweiten Untersetzungsmittels (40) sich quer ausgehend von dem ersten Gelenk (81') des zweiten Untersetzungsmittels (40) erstreckt, indem er sich von der anteroposterioren Symmetrieebene (P1) entfernt.

12. Landegestell (5) nach einem der Ansprüche 1 bis 11,
**dadurch gekennzeichnet, dass** der zweite Abschnitt (52) des ersten Untersetzungsmittels (30) im Flug mit dem zweiten Abschnitt (52') des zweiten Untersetzungsmittels (40) fluchtend angeordnet ist.

13. Landegestell (5) nach einem der Ansprüche 1 bis 12,
**dadurch gekennzeichnet, dass** der erste Abschnitt (51) des ersten Untersetzungsmittels (30), der erste Abschnitt (51') des zweiten Untersetzungsmittels (40), die Verbindungsstange (60) des ersten Untersetzungsmittels (30) und die Verbindungsstange (60') des zweiten Untersetzungsmittels (40) während des Fluges parallel zueinander sind.

14. Landegestell (5) nach einem der Ansprüche 1 bis 13,
**dadurch gekennzeichnet, dass** der gedämpfte Querträger (15) einen ersten nach unten gerichteten Arm (16) aufweist, der mit der ersten Kufe (6) fest verbunden ist, sowie einen zweiten nach unten gerichteten Arm (17), der mit der zweiten Kufe (7) fest verbunden ist, sowie einen zentralen Bereich (13), der sich zwischen dem ersten Arm (16) und dem zweiten Arm (17) erstreckt, wobei jedes Untersetzungsmittel (30, 40) an dem zentralen Bereich (13) angelenkt ist.

15. Landegestell (5) nach einem der Ansprüche 1 bis 14,
**dadurch gekennzeichnet, dass** der gedämpfte Querträger (15) ein einziges Befestigungssystem (100) zur Befestigung an dem Rumpf aufweist.

16. Landegestell (5) nach einem der Ansprüche 1 bis 15,
**dadurch gekennzeichnet, dass** der gedämpfte Querträger (15) zwei Befestigungssysteme (101, 102) zur Befestigung an dem Rumpf aufweist.

17. Landegestell (5) nach einem der Ansprüche 1 bis 16,
**dadurch gekennzeichnet, dass** der Stoßdämpfer (70) ein hydraulischer Stoßdämpfer ist.

18. Landegestell (5) nach einem der Ansprüche 1 bis 17,
**dadurch gekennzeichnet, dass** der Stoßdämpfer (70) ein Stoßdämpfer ist, der ein viskoelastisches Organ aufweist.

19. Flugzeug (1) mit einem Rumpf (2),
**dadurch gekennzeichnet, dass** das Flugzeug (1) ein Landegestell (5) nach einem der Ansprüche 1 bis 18 aufweist, das an dem Rumpf befestigt ist, wobei jedes der dritten Gelenke (83) an dem Rumpf (2) angelenkt ist.

## Claims

1. Landing gear (5) for an aircraft (1) provided with a first longitudinal support skid (6) and a second longitudinal support skid (7) together with a cross-member (10) referred to as a "front cross-member (11)" and a cross-member (10) referred to as a "rear cross-member (12)", each extending transversely between the first skid (6) and the second skid (7), the landing gear (5) comprising at least one damping device (20) arranged on at least one of said cross-members (10) called a "damped cross-member (15)", said damping device comprising a damper,
**characterised in that** said damping device (20) comprises:
- a demultiplication means referred to as a "first demultiplication means (30)" and a demultiplication means referred to as a "second demultiplication means (40)", each demultiplication means (30,40) being articulated to said damped cross-member (15) and being suitable for being articulated to a fuselage (2) of said aircraft (1),
- each demultiplication means (30, 40) comprising:
∘ a bell-crank (50, 50') articulated to said damped cross-member (15) by an articulation referred to as a "first articulation (81, 81')" defining a first longitudinal axis of rotation (810,810'), said bell-crank (50, 50') being provided with a first segment (51, 51') extending from a first free end (53, 53') to a first root (54, 54'), said bell-crank (50, 50') being provided with a second segment (52, 52') extending from a second free end (55, 55') to a second root (56, 56') secured to the first root (54), said first free end (53) comprising an articulation referred to as a "second articulation (82, 82')" defining a second longitudinal axis of rotation (820, 820'),
∘ a link rod (60, 60') extending from a first end zone (61, 61') to a second end zone (62, 62'), said first end zone (61, 61') being articulated to said second free end (55, 55') by an articulation referred to as a "third articulation (83, 83')" defining a third longitudinal axis of rotation (830, 830'), said second end zone (62, 62') comprising an articulation suitable for being fastened to said fuselage (2) and referred to as a "fourth articulation (84, 84')" which defines a fourth longitudinal axis of rotation (840, 840'),
- the damper (70) articulated to the second articulation (82) of the first demultiplication means (30) and to the second articulation (82') of the second demultiplication means (40).

2. Landing gear (5) according to claim 1,
**characterised in that** the first demultiplication means (30) and the second demultiplication means (40) are identical.

3. Landing gear (5) according to any one of claims 1 to 2,
**characterised in that** a first distance (301) in elevation separating said first axis of rotation (810) of one of said demultiplication means (30) from the second axis of rotation (820) of this demultiplication means (30), a second distance (302) in elevation separating said third axis of rotation (830) of this demultiplication means (30) from the fourth axis of rotation (840) of this demultiplication means (30), said first distance (301) in elevation is greater than said second distance in elevation (302).

4. Landing gear (5) according to any one of claims 1 to 3,
**characterised in that** at least one of said articulations (81, 82, 83, 84, 81', 82', 83', 84') is a ball-joint articulation.

5. Landing gear (5) according to any one of claims 1 to 4,
**characterised in that** at least one of said articulations (81, 82, 83, 84, 81', 82', 83', 84') comprises a laminated bearing.

6. Landing gear (5) according to any one of claims 1 to 5,
**characterised in that** at least one bell-crank (50, 50') is L-shaped.

7. Landing gear (5) according to any one of claims 1 to 6,
**characterised in that** said first articulation (81, 81') of a bell-crank (50, 50') is connected to a junction (57, 57') between said first root (54, 54') and the second root (56, 56') of the bell-crank (50, 50').

8. Landing gear (5) according to any one of claims 1 to 7,
**characterised in that** a first distance (301) in elevation separating said first axis of rotation (810) of one of said demultiplication means (30) from the second axis of rotation (820) of this demultiplication means (30), a transverse length (303) separating said first axis of rotation (810) of this demultiplication means (30) from the third axis of rotation (830) of this demultiplication means (30), said first distance (301) is equal to said transverse length (303).

9. Landing gear (5) according to any one of claims 1 to 7,
**characterised in that** a first distance (301) in elevation separating said first axis of rotation (810) of one of said demultiplication means (30) from the second axis of rotation (820) of this demultiplication means (30), a transverse length (303) separating said first axis of rotation (810) of this demultiplication means (30) from the third axis of rotation (830) of this demultiplication means (30), said first distance (301) is different from said transverse length (303).

10. Landing gear (5) according to any one of claims 1 to 9,
**characterised in that** the first demultiplication means (30) and the second demultiplication means (40) are arranged on one side and on the other side of an antero-posterior plane of symmetry (P1) of said damped cross-member (15).

11. Landing gear (5) according to any one of claims 1 to 10,
**characterised in that** said second segment (52) of said first demultiplication means (30) extends transversely from the first articulation (81) of the first demultiplication means (30) towards an antero-posterior plane (P1) of symmetry of said damped cross-member (15), said second segment (52') of said second demultiplication means (40) extending transversely from the first articulation (81') of the second demultiplication means (40) away from said antero-posterior plane of symmetry (P1).

12. Landing gear (5) according to any one of claims 1 to 11,
**characterised in that** said second segment (52) of said first demultiplication means (30) is arranged, while in flight, in alignment with said second segment (52') of said second demultiplication means (40).

13. Landing gear (5) according to any one of claims 1 to 12,
**characterised in that** said first segment (51) of said first demultiplication means (30), said first segment (51') of said second demultiplication means (40), said link rod (60) of said first demultiplication means (30) and the link rod (60') of said second demultiplication means (40), while in flight, are parallel to one another.

14. Landing gear (5) according to any one of claims 1 to 13,
**characterised in that** said damped cross-member (15) having a first downward branch (16) secured to the first skid (6) and a second downward branch (17) secured to the second skid (7), and a central portion (13) extending between the first branch (16) and the second branch (17), each demultiplication means (30, 40) is articulated to said central portion (13).

15. Landing gear (5) according to any one of claims 1 to 14,
**characterised in that** said damped cross-member (15) comprises a single fastening system (100) for being fastened to said fuselage.

16. Landing gear (5) according to any one of claims 1 to 15,
**characterised in that** said damped cross-member (15) comprises two fastening systems (101, 102) for being fastened to said fuselage.

17. Landing gear (5) according to any one of claims 1 to 16,
**characterised in that** said damper (70) is a hydraulic damper.

18. Landing gear (5) according to any one of claims 1 to 17,
**characterised in that** said damper (70) is a damper comprising a viscoelastic member.

19. Aircraft (1) provided with a fuselage (2),
**characterised in that** said aircraft (1) comprises a landing gear (5) according to any one of claims 1 to 18 attached to said fuselage, each third articulation (83) being articulated to said fuselage (2).
